# EUROPEAN PATENT APPLICATION

(11) **EP 4 290 929 A1**
(43) Date of publication of application: **13.12.2023**
(21) Application number: 22177582.8
(22) Date of filing: 07.06.2022
(51) Int. Cl.: H04W 48/04

(54) **NETWORK ACCESS POINT AND METHOD OF CONTROLLING ACCESS TO A NETWORK ACCESS POINT**

(71) Applicant: Vestel Elektronik Sanayi ve Ticaret A.S., 45030 Manisa (TR)
(72) Inventor: AYGUL, Mehmet Ali, 45030 Manisa (TR); KIRISKEN, Barbaros, 45030 Manisa (TR)
(74) Representative: Page White Farrer

(57) **Abstract**

At least one of a first device (20) and a second device (20) of a plurality of devices (20) wirelessly connected to a network access point (10) measure the distance between said devices (20) using ultra-wideband, UWB, wireless communication and send data for said distance to the network access point (10). The network access point (10) measures the distance between the network access point (10) and at least one of said devices (20) using a measure of received signal strength. The network access point (10) determines the location of said devices (20) based on the distances. The network access point (10) provides a graphical representation of the location of said devices (20) in the form of a map (50). The network access point (10) receives an input from a user that defines a safe zone (30) on the map (50) and controls access to the network access point (10) by a device (20) in dependence on whether or not the device (20) is located within the safe zone (30).

## Description

### Technical Field

The present disclosure relates to a network access point and to a method of controlling access to a network access point.

### Background

In order for a device to be able to connect to a network it is usually necessary for the device to provide network credentials to the network, and for the network credentials to be updated at the device if they change. In the case of some devices, a user can simply input the network credentials to the device manually and directly, using for example a keyboard which is connected to the device. However, there are many devices that need to connect to a network but which do not have a user interface such as a keyboard or the like.

### Summary

According to a first aspect disclosed herein, there is provided a method of controlling access to a network access point by a device, wherein a plurality of devices are already wirelessly connected to the network access point, the method comprising:
at least one of a first device of the plurality of connected devices and a second device of the plurality of connected devices measuring the distance between the first device and the second device using ultra-wideband, UWB, wireless communication between said devices and sending data for said distance to the network access point;
the network access point measuring the distance between the network access point and at least one of the first connected device and the second connected device using a measure of received signal strength received from said at least one of the first connected device and the second connected device;
the network access point determining the location of said first connected device and the second connected device devices based on the distance between the first device and the second device which is measured using UWB wireless communication and said distance between the network access point and said at least one of the first connected device and the second connected device which is measured using received signal strength;
the network access point providing a graphical representation of the location of said first and second connected devices in the form of a map on which the location of the said first and second connected devices is indicated; and
the network access point receiving an input from a user that defines a safe zone on the map;
the network access point controlling access to the network access point by a device in dependence on whether or not said device is located within the safe zone.

In an example, the method comprises:
at least one of the second device and a third device of the plurality of connected devices measuring the distance between the second device and the third device using UWB wireless communication between said devices and sending data for said distance to the network access point; and
at least one of the first device and the third device measuring the distance between the first device and the third device using UWB wireless communication between said devices and sending data for said distance to the network access point; and
the network access point determining the location of said first, second and third connected devices based on the distance between the first device and the second device, the distance between the second device and the third device, the distance between the first device and the third device, which are measured using UWB wireless communication, and said distance between the network access point and said at least one of the first connected device and the second connected device which is measured using received signal strength;
wherein the graphical representation provided by the network access point includes the location of said first, second and third connected devices in the form of a map on which the location of the said first, second and third connected devices is indicated.

In an example, the method comprises:
the network access point measuring the distance between the network access point and the first connected device, the distance between the network access point and the second connected device, and the distance between the network access point and the third connected device using a measure of received signal strength received from the first connected device, second connected device and the third second connected device; and
the network access point determining the location of said first, second and third connected devices based on the distance between the first device and the second device, the distance between the second device and the third device, and the distance between the first device and the third device, which are measured using UWB wireless communication, and the distances between the network access point and the first connected device, the second connected device and the third connected device, which are measured using received signal strength.

In an example, the method comprises the network access point automatically providing network credentials to a device to allow the device to connect to the network access point if the network access point determines that said device is located within the safe zone.

In an example, the method comprises the network access point automatically sending updated network credentials to a device if the network credentials for the network access point are changed and the network access point determines that said device is located within the safe zone.

In an example, the method comprises the network access point allowing a device to connect to the network access point and automatically preventing access to the Internet by said device via the network access point if the network access point determines that said device is not located within the safe zone.

According to a first aspect disclosed herein, there is provided a network access point constructed and arranged to control access to the network access point by a device, the network access point being configured to carry out a method comprising:
receive, from at least one of a first device and a second device of a plurality of connected devices which are already wirelessly connected to the network access point, a measure of the distance between the first device and the second device which is obtained by said at least one of the first device and the second device using UWB wireless communication between said devices;
measure the distance between the network access point and at least one of the first connected device and the second connected device using a measure of received signal strength received from said at least one of the first connected device and the second connected device;
determine the location of said first connected device and the second connected device devices based on the distance between the first device and the second device which is measured using UWB wireless communication and said distance between the network access point and said at least one of the first connected device and the second connected device which is measured using received signal strength.
provide a graphical representation of the location of said first and second connected devices in the form of a map on which the location of the said first and second connected devices is indicated; and
receive an input from a user that defines a safe zone on the map; and
control access to the network access point by a device in dependence on whether or not said device is located within the safe zone.

In an example, the network access point is configured to:
receive, from at least one of the second device and a third device of the plurality of connected devices, a measure of the distance between the second device and the third device which is obtained by said at least one of the second device and the third device using UWB wireless communication;
receive, from at least one of the first device and the third device of the plurality of connected devices, a measure of the distance between the first device and the third device which is obtained by said at least one of the first device and the third device using UWB wireless communication; and
determine the location of said first, second and third connected devices based on the distance between the first device and the second device, the distance between the second device and the third device, the distance between the first device and the third device, which are measured using UWB wireless communication, and said distance between the network access point and said at least one of the first connected device and the second connected device which is measured using received signal strength;
wherein the graphical representation provided by the network access point includes the location of said first, second and third connected devices in the form of a map on which the location of the said first, second and third connected devices is indicated.

In an example, the network access point is configured to:
measure the distance between the network access point and the first connected device, the distance between the network access point and the second connected device, and the distance between the network access point and the third connected device using a measure of received signal strength received from the first connected device, second connected device and the third second connected device respectively; and
determine the location of said first, second and third connected devices based on the distance between the first device and the second device, the distance between the second device and the third device, the distance between the first device and the third device, which are measured using UWB wireless communication, and the distances between the network access point and the first connected device, the second connected device and the third connected device which are measured using received signal strength.

In an example, the network access point is configured to automatically provide network credentials to a device to allow the device to connect to the network access point if the network access point determines that said device is located within the safe zone.

In an example, the network access point is configured to automatically send updated network credentials to a device if the network credentials for the network access point are changed and the network access point determines that said device is located within the safe zone.

In an example, the network access point is configured to allow a device to connect to the network access point and automatically prevent access to the Internet by said device via the network access point if the network access point determines that said device is not located within the safe zone.

### Brief Description of the Drawings

To assist understanding of the present disclosure and to show how embodiments may be put into effect, reference is made by way of example to the accompanying drawings in which:
Figure 1 shows schematically a plan view from above of a region, such as an apartment, containing one or more network access points and one or more devices and illustrating a safe zone;
Figure 2 shows schematically a plan view from above of a region and a network access point and plural devices to indicate schematically the wireless connections between the network access point and the plural devices;
Figure 3 shows schematically an example of a graphical representation of the location of the network access point and the plural devices and a safe zone defined for the network access point;
Figure 4 shows schematically a plan view from above of the region of Figure 1 and an adjacent region which is outside the safe zone; and
Figure 5 shows schematically a plan view from above of the region of Figure 1 in which a user and user device have moved out of the safe zone.

### Detailed Description

There are many devices that need to connect to a network and therefore require network credentials which are passed to the network so that the network can authenticate the device. Many such devices do not have a user interface such as a keyboard or the like which enable a user to enter the network credentials manually and directly, or have only a very simple interface which is not easy to use or is not suitable for such a task.

A solution to this is to put the device into AP (Access Point) mode and then use a "captive portal" or similar to connect to the device. As another example, "Wi-Fi Protected Setup" (trade mark) is an optional certification program which is designed to ease the setup of security-enabled Wi-Fi networks in home and small office environments. Wi-Fi Protected Setup supports methods (such as pushing a button or entering a PIN) that are familiar to most consumers to configure a network and enable security. However, in either case, this is inconvenient for the user as the user must be in attendance. This is a particular problem for devices that are intended as consumer devices as consumers are often not technically minded or technically proficient. Moreover, physical access to the device may be difficult, particularly once it has been fixed in place in a location.

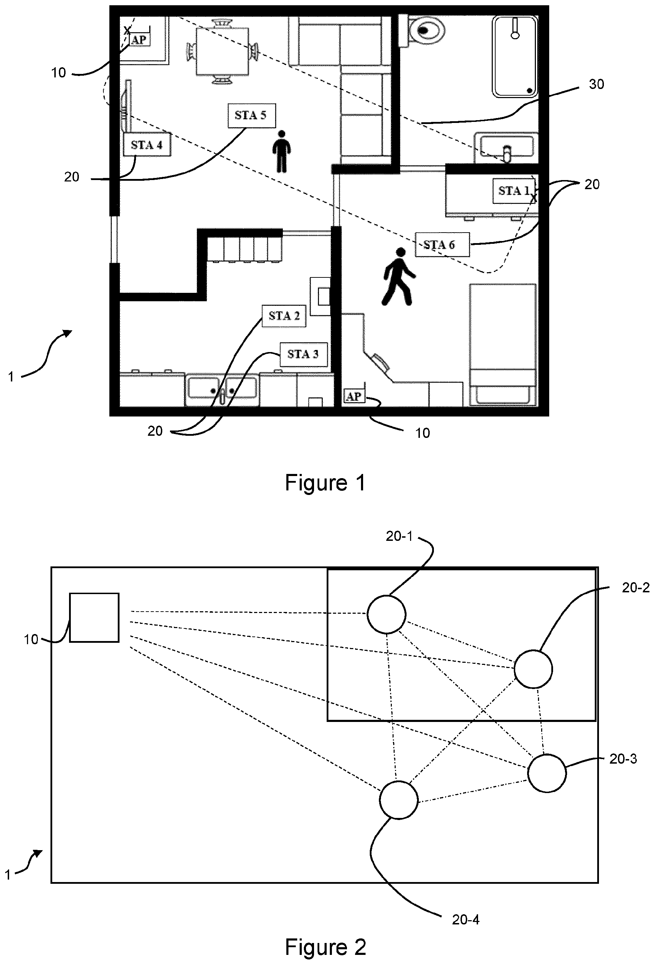

Referring to the drawings, Figure 1 shows schematically a plan view from above of a region 1 containing one or more network access points 10 and one or more devices 20. The region 1 may be a dwelling, such as an apartment or floor of a house, an office or factory space, etc. The network access points 10 are indicated with the abbreviation AP. The different devices 20 are indicated with the abbreviations STA1, STA2, etc.

One or more of the devices 20 may be fixed or stationary. One or more of the devices 20 may be for example a white goods appliance, such as for example a washing machine, a tumble dryer, a combined washing machine and tumble dryer, a dishwasher, a refrigeration apparatus such as a fridge or freezer or combined fridge-freezer, etc. One or more of the devices 20 may be a black goods appliance, such as for example a television set, a display screen or panel, a PVR (personal video recorder, also known as a DVR or digital video recorder), a DVD player, a Blu Ray player, a set-top box, a desktop computer, etc., a video game console, a printer, etc. One or more of the devices 20 may be mobile, such as for example a laptop or tablet computer, etc., a cellular phone (including a so-called "smart phone"), a personal media player, etc. In the example illustrated,

One or more of the access points 10 may be a wireless router. Each device 20 is intended to be configured to connect wirelessly to one or more of the access points 10 to be able to access a local area network provided by the access point 10 and, in many cases, to the Internet via the access point 10. In the illustrative example shown, the devices 20 STA1, STA2 and STA3 are white goods appliances, the device 20 STA4 is a television set, and the devices 10 STA5 and STA6 are mobile communication devices such as smart phones or portable computers.

A problem is that at least some of the devices 20 may not have any interface or may have only a simple interface, which makes it difficult for the user to enter into the device 20 the necessary network credentials which are required in order to allow the device 20 to connect wirelessly to the access point 10. Even if the device 20 does have an interface, conventionally it is commonly required that the user has to enter the necessary network credentials manually one way or another. This is inconvenient for the user. In addition, the network credentials for the access point 10 may change over time, which conventionally requires the user manually to update the network credentials at each device 20, which again is inconvenient.

It is known to associate two wireless communication devices with each other by transmitting and receiving a signal which is useable to obtain ranging information between the two wireless communication devices. That is, if it is determined that the two wireless communication devices are close to each other, then the two wireless communication devices can be associated wirelessly with each other. An example is disclosed in US2009/0055123A1. However, a problem with this is that it means that any device that is close will be associated, even if that is a device that is not owned or used by the user, such as a device in a neighbouring dwelling.

In examples described herein, a number of devices 20 that are already connected to the access point 10 measure the distance between each other and provide measurements of the distances to the access point 10. The access point 10 also measures the distance between the access point 10 and at least one of the devices 20 using a measure of received signal strength received from said device 20. The access point 10 uses that information to determine the location of the already-connected devices 20. The access point 10 provides a graphical representation of the location of the already-connected devices 20 in the form of a map on which the location of the already-connected devices 20 is indicated. A user can then provide an input to the access point 10, for example via a graphical user interface and/or touch screen or the like on which the map is provided, effectively to "draw" a "safe zone" for devices of the user. The access point 10 then uses that safe zone to control access to the access point 10 by a device in dependence on whether or not said device is located within the safe zone. The devices 20 can measure the distance between each other using ultra-wideband, UWB, wireless communication. This provides an accurate measure of the distance between the devices 20, which in turn means that the location of the devices 20 is determined accurately at the access point 10.

This use of a safe zone means that the user does not have to manually enter or update network credentials for a device to enable the device to connect to or remain connected to the access point. The access point 10 can handle this automatically without requiring input by the user or even any attendance by the user. It also means that devices outside of the safe zone, as defined by the user, are not provided with network credentials or the like or at least can have their access to the access point 10 or rights and permissions to use the access point 10 controlled accordingly.

The precise network credentials and their format that are required will typically depend on the nature of the network and any accessibility requirements to allow a connection to the network to be made. As a generality, the network credentials will include some identifier of the network to which the devices 20 will connect and some password or passphrase which is required in order for the connection to be authenticated. As a specific example, in the case of a wireless local area network (WLAN), including for example Wi-Fi, network credentials will include an SSID (Service Set Identifier) and a password or passphrase. A service set identifier (SSID) is a sequence of characters that names a wireless local area network (WLAN).

Referring back to Figure 1, a safe zone 30 is illustrated by dashed lines. This safe zone 30 is generally rectangular and is associated with a first access point 10 marked with an X (top left in the drawing). The mobile devices STA5 and STA6 associated with two users are within the safe zone 30 and so are directly and automatically provided with network credentials by the first access point 10 to enable them to connect to the first access point 10. The same is true for STA1 and STA4 which are also within the safe zone 30.

Referring now to Figure 2, this shows schematically a plan view from above of a region and a network access point and plural devices to indicate schematically the wireless connections between the network access point and the plural devices in an example of the present disclosure. The same reference numerals as used for Figure 1 are used to identify the different items. In the case of the devices 20, a suffix 1, 2, etc. is used to label the first device 20-1, the second device 20-2, etc.

Each of the devices 20 is already connected to the access point 10, as part of the WLAN, such as Wi-Fi, provided by the access point 10. The wireless Wi-FI communications between each device 20 and the access point 10 are indicated by dashed lines.

Further, each of the devices 20 is able to communicate with each other of the devices 20 using ultra-wideband, UWB, wireless communication. Each of the devices 20 has a suitable UWB chipset and transmitter and receiver for this purpose. As known per se, UWB is a short-range wireless communication protocol which uses high frequencies (such as between 3.1 to 10.6 GHz) across a wide frequency spectrum (at least 500 MHz or 20% of the centre frequency). Unlike most traditional radio signals, UWB does not use power, frequency or phase modulation to encode the information that is carried by the wireless signals. Instead, UWB uses frequent pulses at specific time intervals (typically every couple of nanoseconds) to carry the information. This allows transmission across a wide bandwidth while avoiding interference with other radio signals in the same spectrum.

The devices 20 can measure the distance between each other using UWB communications. As an example with UWB, time-of-flight (ToF) techniques (also known as two way ranging (TWR)) may be used, in which the distance between a transmitter and a receiver is calculated based on how long it takes for pulses of the radio signals to travel from one device to the other. The distance between the devices can typically be determined with an accuracy of less than 50 centimetres, and even less than around 10 centimetres. Further, the latency to obtain a distance measurement using ToF and UWB can be less than 1 ms. Therefore, ToF with UWB enables sensitive and accurate location particularly if one of the devices is moving.

Accordingly, in an example, at least two of the devices 20 that are already wirelessly connected to the access point 20 measure the distance to each other using UWB, for example by using ToF measurements of UWB signals sent directly between the devices 20. For example, the device 20-1 can measure the distance to the device 20-2 or, equivalently, the device 20-2 can measure the distance to the device 20-1. Data for the distances are sent to the access point 10 by whichever device 20 made the measurements.

Further, the access point 10 additionally uses a measure of received signal strength which is provided by at least one of the devices 20 to obtain a measure of the distance from the access point 10 to the device(s) 20. For example, in a manner known per se, the access point 10 may measure the distance to a device 20 using a "Received Signal Strength Indicator", RSSI, which is provided by the device 20. As another example, the access point 10 may measure the distance to a device 20 using a Received Channel Power Indicator, RCPI. RCPI is a measure of the received radio frequency power in a selected channel. This measurement of the distance from the access point 10 to one or more of the devices 20 may be used to locate the devices 20 relative to the access point 10.

Accordingly, the access point 10 has an accurate measurement of the distance between at least two of the already connected devices 20, which is obtained by the devices using UWB, and a measurement of the distance to at least one of the already connected devices 20, which is obtained using a measure of received signal strength. This may be sufficient to locate the devices 20 in 2D space. For example, the access point 10 may know the direction of the two already connected devices 20. For example, known access points are capable of finding the direction of a connected device and several techniques are known in the literature. As a particular example, the angle of arrival (AoA) can be used for this purpose. For example, an AoA system may use an antenna array on the receiver side, so that by measuring the phase-shift of the incoming signal, the receiver can determine the direction of the incoming signal. In any event, knowing the direction, this is sufficient to enable a graphical representation of the location of the devices 20 in the form of a map to be provided for a user, as will be discussed further below.

As an option, the access point 10 may measure the distance to plural ones of the already connected devices 20 using a measure of received signal strength received from those devices 20 . This further assists the access point 10 in locating the devices 20 in 2D space, especially if the access point 10 does not know the direction of a device 20, and also helps the access point 10 locate the devices 20 more accurately.

As another option, more than two of the devices 20 that are already wirelessly connected to the access point 20 measure the distance to each other using UWB, for example by using ToF measurements of UWB signals sent directly between the devices 20. For example, the device 20-2 can measure the distance to the device 20-3 or, equivalently, the device 20-3 can measure the distance to the device 20-2; and the device 20-3 can measure the distance to the device 20-1 or, equivalently, the device 20-1 can measure the distance to the device 20-3. This may be carried out by more than three of the devices 20 if present. In each case, data for the distances are sent to the access point 10 by whichever device 20 made the measurements. This enables the location of the further devices 20 to be identified by the access point 10 and also indicated on the graphical representation. This can also assist in improving the accuracy of the location of the devices 20 as it can provide a "cross check" of distance measurements made between pairs of the devices 20.

In any case, once the access point 10 has obtained the UWB distance measurements between one or more respective pairs of the devices 20 from the devices 20 and has obtained the distance from the access point 10 to one or more of the devices 20 obtained using received signal strength measurements, the access point 10 outputs a graphical representation of the location of the devices 20 in the form of a map. This map may be output on a display screen of the access point 10, though could alternatively or additionally be output by the access point 10 to an external computing device, such as a fixed or portable computer, smart phone or the like, for display on an associated display screen by the external computing device.

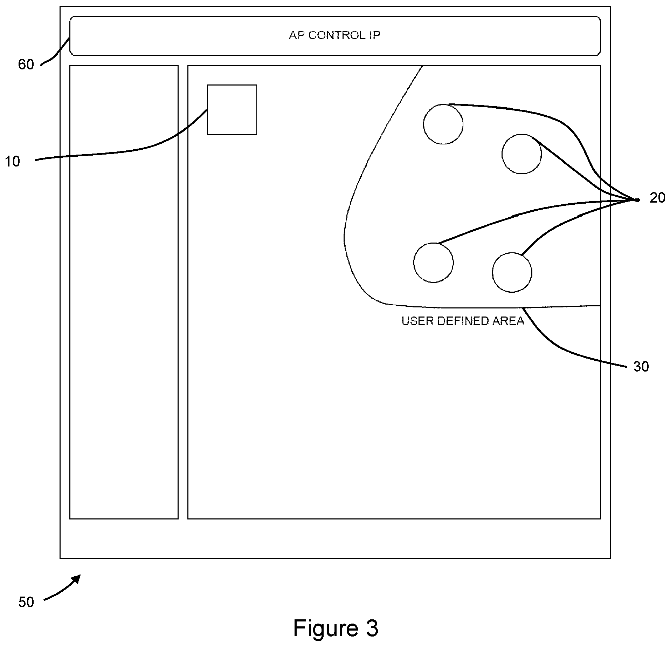

Figure 3 shows schematically an example of a graphical representation or map 50 of the location of the network access point 10 and the plural devices 20 as caused to be displayed by the access point 10 (either locally at the access point 10 or at some external display screen, as noted above). The display also has an input region 60 for controlling the access point 10, which may be for example a menu type display or the like. The map 50 corresponds to the region 1, such as the dwelling or office space, etc. in which the access point 10 and the plural devices 20 are physically located.

Using some input, which may be via a touch screen or using a pointing device such as a computer mouse or trackpad, etc., the user provides an input that defines a safe zone 30 on the map 50 which is received at the access point 10. In effect, the user "draws" what the user considers to be a "safe zone" such that devices located in that safe zone 30 are considered to be legitimate (such as devices owned or used by the user and family or colleagues or the like).

This safe zone 30 defines the area and boundaries for use by the access point 10 in controlling access to the access point 10 by a device. In particular, consider a new device 20, which is not already connected to the access point 10 and does not have the necessary network credentials for the access point 10. The new device 20 automatically uses UWB communication with one or more of the already connected devices 20 to measure the distance between to one or more of the already connected devices 20. The new device 20 sends the distance measurement(s) to the access point 10. Optionally, the access point 10 also uses a measure of received signal strength received from the new device using Wi-Fi or similar signals. The access point 10 then uses this information to identify the location of the new device and in particular determines whether or not the new device is located in the safe zone 30. The access point 10 controls access to the access point 10 by the new device in dependence on whether or not the new device is located within the safe zone 30.

For example, if the access point 10 determines that the new device is located in the safe zone 30, then the access point 10 can automatically (without requiring user input) provide network credentials to the new device to allow the new device to connect to the access point 10. This is particular beneficial for user, who does not need to manually input network credentials for the access point 10 to a new device (such as a new white goods appliance, black goods appliance, etc.). On the other hand, if a new device 20 is not located in the safe zone 30, then the access point 10 does not provide network credentials to the device 20.

As another example, it may occur that the network credentials for the access point 10 change and so the network credentials for any device 20 already connected to the access point 10 need to be updated. In such a case, if the access point 10 determines that a device 20 is located in the safe zone 30, then the access point 10 can automatically (without requiring user input) provide updated network credentials to the device 20. On the other hand, if a device 20 is not located in the safe zone 30, then the access point 10 does not provide updated network credentials to the device 20 even if the device 20 is a device that is or was previously connected to the access point 10.

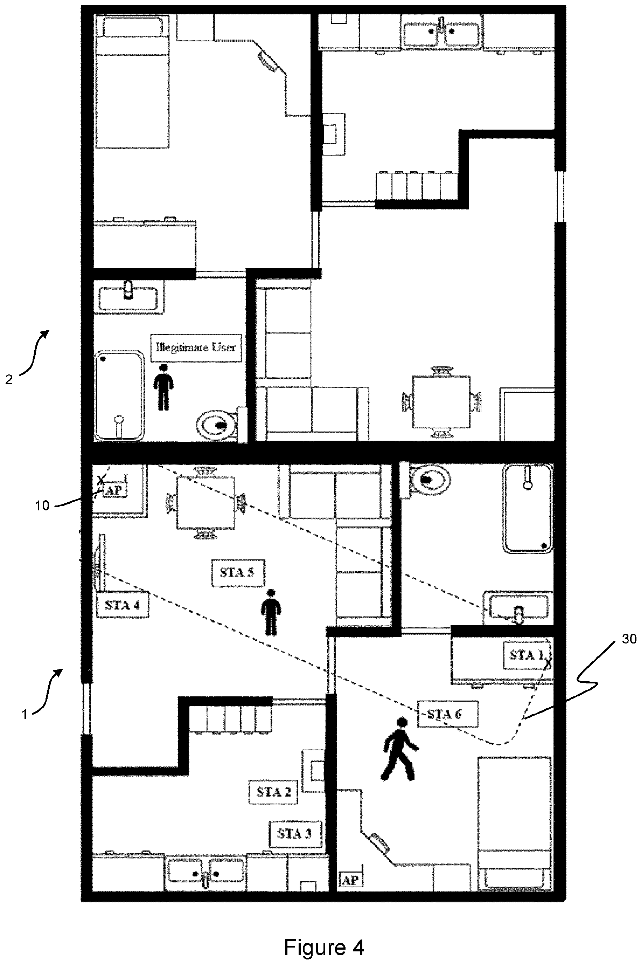

This is illustrated schematically in Figure 4 which shows a plan view from above of the region 1 of Figure 1 and an adjacent region 2. The adjacent region 2 may be for example a dwelling, such as an apartment or a house, an office or factory space, etc., which is adjacent or at least near to the region of Figure 1. Notably, the adjacent region 2 is outside the safe zone 30 which has been drawn by a user of or associated with the region 1. Therefore, any device that is located in the adjacent region 2 is treated as illegitimate by the access point 10 and is not provided with network credentials or updated network credentials by the access point 10. This means that even though devices of a user in the adjacent region 2 may be physically close to the access point 10 of the first region 1, such devices are still not able to connect to the access point 10 of the first region 1 and be provided with network services by the access point 10 of the first region 1. This is different from a number of known techniques which only use distance (i.e. proximity) to determine if a device should be permitted to connect to an access point, which therefore would permit devices of a user in the adjacent region 2 to connect to the access point.

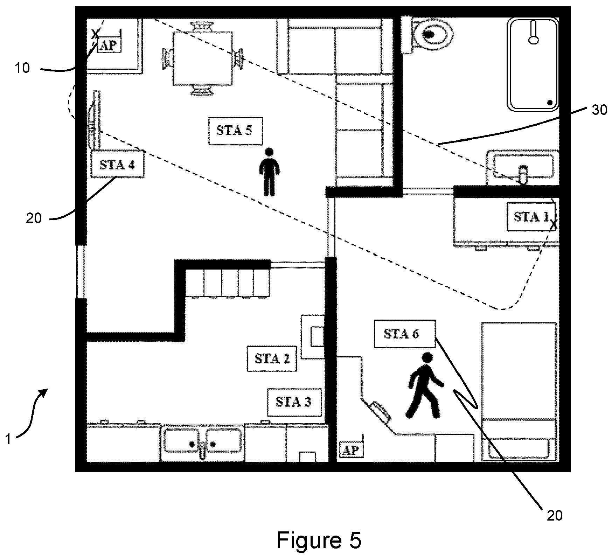

As another option, a device 20 may have the correct network credentials for the access point 10, but usage of the services provided by the access point 10 may be controlled differently depending on whether or not the device 20 is located in the safe zone 30. Referring to Figure 5 for example, this shows schematically a plan view from above of the region 1 of Figure 1 in which a user and user device STA6 have moved out of the safe zone 30 (compare with Figure 1 where that user device STA6 is located within the safe zone 30). For example, the user device STA6 may be able to remain connected to the access point 10, but access to the Internet by the user device STA6 is prevented by the access point 10. This allows the access point 10 still to track the location of the user device STA6, using for example a measure of received signal strength received from the user device STA6, allowing the status of the user device STA6 to be updated quickly at the access point 10 if and when the user device STA6 moves back into the safe zone 30. Also, this means that if an illegitimate user has managed to obtain the network credentials for the access point 10, for example by some form of "hacking" or the like, devices of that illegitimate user can still cannot connect to the access point 10 and/or access the Internet via the access point 10 as such illegitimate user devices will be outside the safe zone 30.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of controlling access to a network access point by a device, wherein a plurality of devices are already wirelessly connected to the network access point, the method comprising:
at least one of a first device of the plurality of connected devices and a second device of the plurality of connected devices measuring the distance between the first device and the second device using ultra-wideband, UWB, wireless communication between said devices and sending data for said distance to the network access point;
the network access point measuring the distance between the network access point and at least one of the first connected device and the second connected device using a measure of received signal strength received from said at least one of the first connected device and the second connected device;
the network access point determining the location of said first connected device and the second connected device devices based on the distance between the first device and the second device which is measured using UWB wireless communication and said distance between the network access point and said at least one of the first connected device and the second connected device which is measured using received signal strength;
the network access point providing a graphical representation of the location of said first and second connected devices in the form of a map on which the location of the said first and second connected devices is indicated; and
the network access point receiving an input from a user that defines a safe zone on the map;
the network access point controlling access to the network access point by a device in dependence on whether or not said device is located within the safe zone.

2. A method according to claim 1, comprising:
at least one of the second device and a third device of the plurality of connected devices measuring the distance between the second device and the third device using UWB wireless communication between said devices and sending data for said distance to the network access point; and
at least one of the first device and the third device measuring the distance between the first device and the third device using UWB wireless communication between said devices and sending data for said distance to the network access point; and
the network access point determining the location of said first, second and third connected devices based on the distance between the first device and the second device, the distance between the second device and the third device, the distance between the first device and the third device, which are measured using UWB wireless communication, and said distance between the network access point and said at least one of the first connected device and the second connected device which is measured using received signal strength;
wherein the graphical representation provided by the network access point includes the location of said first, second and third connected devices in the form of a map on which the location of the said first, second and third connected devices is indicated.

3. A method according to claim 2, comprising:
the network access point measuring the distance between the network access point and the first connected device, the distance between the network access point and the second connected device, and the distance between the network access point and the third connected device using a measure of received signal strength received from the first connected device, second connected device and the third second connected device; and
the network access point determining the location of said first, second and third connected devices based on the distance between the first device and the second device, the distance between the second device and the third device, and the distance between the first device and the third device, which are measured using UWB wireless communication, and the distances between the network access point and the first connected device, the second connected device and the third connected device, which are measured using received signal strength.

4. A method according to any of claims 1 to 4, comprising the network access point automatically providing network credentials to a device to allow the device to connect to the network access point if the network access point determines that said device is located within the safe zone.

5. A method according to any of claim 1 to 4, comprising the network access point automatically sending updated network credentials to a device if the network credentials for the network access point are changed and the network access point determines that said device is located within the safe zone.

6. A method according to any of claim 1 to 5, comprising the network access point allowing a device to connect to the network access point and automatically preventing access to the Internet by said device via the network access point if the network access point determines that said device is not located within the safe zone.

7. A network access point constructed and arranged to control access to the network access point by a device, the network access point being configured to carry out a method comprising:
receive, from at least one of a first device and a second device of a plurality of connected devices which are already wirelessly connected to the network access point, a measure of the distance between the first device and the second device which is obtained by said at least one of the first device and the second device using UWB wireless communication between said devices;
measure the distance between the network access point and at least one of the first connected device and the second connected device using a measure of received signal strength received from said at least one of the first connected device and the second connected device;
determine the location of said first connected device and the second connected device devices based on the distance between the first device and the second device which is measured using UWB wireless communication and said distance between the network access point and said at least one of the first connected device and the second connected device which is measured using received signal strength.
provide a graphical representation of the location of said first and second connected devices in the form of a map on which the location of the said first and second connected devices is indicated; and
receive an input from a user that defines a safe zone on the map; and
control access to the network access point by a device in dependence on whether or not said device is located within the safe zone.

8. A network access point according to claim 7, configured to:
receive, from at least one of the second device and a third device of the plurality of connected devices, a measure of the distance between the second device and the third device which is obtained by said at least one of the second device and the third device using UWB wireless communication;
receive, from at least one of the first device and the third device of the plurality of connected devices, a measure of the distance between the first device and the third device which is obtained by said at least one of the first device and the third device using UWB wireless communication; and
determine the location of said first, second and third connected devices based on the distance between the first device and the second device, the distance between the second device and the third device, the distance between the first device and the third device, which are measured using UWB wireless communication, and said distance between the network access point and said at least one of the first connected device and the second connected device which is measured using received signal strength;
wherein the graphical representation provided by the network access point includes the location of said first, second and third connected devices in the form of a map on which the location of the said first, second and third connected devices is indicated.

9. A network access point according to claim 8, configured to:
measure the distance between the network access point and the first connected device, the distance between the network access point and the second connected device, and the distance between the network access point and the third connected device using a measure of received signal strength received from the first connected device, second connected device and the third second connected device respectively; and
determine the location of said first, second and third connected devices based on the distance between the first device and the second device, the distance between the second device and the third device, the distance between the first device and the third device, which are measured using UWB wireless communication, and the distances between the network access point and the first connected device, the second connected device and the third connected device which are measured using received signal strength.

10. A network access point according to any of claims 7 to 9, configured to automatically provide network credentials to a device to allow the device to connect to the network access point if the network access point determines that said device is located within the safe zone.

11. A network access point according to any of claim 7 to 10, configured to automatically send updated network credentials to a device if the network credentials for the network access point are changed and the network access point determines that said device is located within the safe zone.

12. A network access point according to any of claim 7 to 11, configured to allow a device to connect to the network access point and automatically prevent access to the Internet by said device via the network access point if the network access point determines that said device is not located within the safe zone.
